# FASCICULE DE BREVET EUROPEEN

(11) **EP 2 772 169 B1**
(45) Date de publication et mention de la délivrance du brevet: **18.04.2018**
(21) Numéro de dépôt: 14154080.7
(22) Date de dépôt: 06.02.2014
(51) Int. Cl.: A47J 45/07, A47J 45/10

(54) **Dispositif de préhension amovible d'un recipient culinaire muni de moyens antiretour de deux bras**
Abnehmbare Greifvorrichtung eines Kochbehälters, die mit Arretierungsmitteln für beide Griffe versehen ist
Removable gripping device for a food container provided with a backstop means for two arms

(30) Priorité: 27.02.2013 FR 1351708
(43) Date de publication de la demande: 03.09.2014
(73) Titulaire: SEB S.A., 69130 Ecully (FR)
(72) Inventeur: Cuillery, Pascal, 74210 FAVERGES (FR)
(74) Mandataire: Bourrières, Patrice

(56) Documents cités:
- WO-A1-2008/096930
- WO-A1-2009/113757
- FR-A1- 2 937 237
- FR-A1- 2 956 021

## Description

L'invention concerne un dispositif de préhension amovible d'un récipient culinaire.

Plus précisément, le dispositif de préhension de l'invention est du type comprenant deux bras de préhension, mobiles entre une position de repos et une position de préhension dans laquelle ils sont écartés l'un de l'autre et en appui contre une face interne d'une paroi latérale du récipient culinaire, un organe fixe de préhension, adapté pour être en appui contre une face externe de la paroi latérale du récipient culinaire, et des moyens de déplacement adaptés pour être commandés manuellement entre une position d'ouverture et une position de fermeture et pour entraîner un écartement des bras mobiles lors du passage de la position d'ouverture à la position de fermeture. Un tel dispositif de préhension est décrit par exemple dans le document FR 2 937 237.

En usage, les deux bras écartés et l'organe fixe coopèrent pour serrer la paroi au moyen de trois surfaces d'appui distinctes. La paroi est comprimée sur un arc de cercle, ce qui assure un bon serrage sans nécessiter de forces de serrage trop importantes. Cela permet de limiter l'usure prématurée du revêtement du récipient. Toutefois, en usage, et en particulier dans le cas où le dispositif de préhension est soumis à des sollicitations dynamiques liées par exemple à des cuissons sautées ou à des retournements de crêpes, des jeux significatifs apparaissent entre le dispositif de préhension et le récipient.

La présente invention vient améliorer la situation.

A cet effet, elle concerne un dispositif de préhension amovible d'un récipient culinaire, ledit récipient comportant une paroi latérale, comprenant
- deux bras de préhension mobiles entre une position de repos et une position de préhension dans laquelle ils sont écartés l'un de l'autre et en appui contre une face interne de la paroi latérale du récipient culinaire;
- un organe fixe de préhension adapté pour être en appui contre une face externe de la paroi latérale du récipient culinaire ;
- des moyens de déplacement adaptés pour être commandés manuellement entre une position d'ouverture et une position de fermeture et pour entraîner un écartement des bras mobiles lors du passage de la position d'ouverture à la position de fermeture,
caractérisé en ce qu'il comprend des moyens antiretour, distincts des moyens de déplacement, adaptés pour être déplacés d'une position de repos à une position de blocage dans laquelle ils sont insérés entre les deux bras et empêchent un rapprochement des deux bras et en ce que les moyens antiretour comprennent deux parois de blocage et les deux bras comportent deux surfaces de blocage respectives correspondantes, les parois de blocage et les surfaces de blocage étant adaptées pour coopérer par coincement de manière à bloquer les deux bras en position écartée.

Grâce à l'invention, les moyens antiretour empêchent un retour, c'est-à-dire un rapprochement, des bras écartés en position ajustée de préhension.

L'écartement ajusté des bras est verrouillé, ce qui permet d'éliminer les jeux entre le dispositif de préhension et le récipient.

On obtient un blocage indépendamment de la position des bras. Le blocage est effectif quelle que soit l'épaisseur ou le diamètre de la paroi.

Avantageusement, le dispositif comprend un organe de déblocage adapté pour être commandé manuellement entre une position de blocage et une position de déblocage et entraîner les moyens antiretour de leur position de blocage à leur position de repos. Les moyens antiretour peuvent ainsi être dégagés de manière à permettre un rapprochement des bras par une commande manuelle d'un utilisateur.

Dans une forme de réalisation particulière, le dispositif comprend des moyens élastiques adaptés pour provoquer, lors de l'écartement des bras, un déplacement des moyens antiretour de leur position de repos à leur position de blocage. Grâce à cela, le déplacement des moyens antiretour est provoqué par l'action de rappel des moyens élastiques lors de l'écartement des bras.

Avantageusement encore, le dispositif s'étendant le long d'un axe longitudinal, lorsque les moyens antiretour sont en position de blocage, les surfaces de blocage des bras sont inclinées par rapport à l'axe longitudinal, selon un angle d'inclinaison compris entre 5° et 30°.

Selon l'angle d'inclinaison, l'effet de coincement est plus ou moins efficace.

Dans une première forme de réalisation, les deux surfaces de blocage portent des rouleaux et les deux surfaces d'appui sont des surfaces de roulement des rouleaux. Dans ce cas, on obtient un blocage par coincement des rouleaux, dont les logements forment des rampes de blocage, contre les surfaces de blocage des bras.

Dans une deuxième forme de réalisation, les deux parois de blocage des moyens antiretour comprennent des surfaces de glissement destinées à glisser sur les deux surfaces de blocage des bras. Dans ce cas, on obtient un blocage par effet de coin entre les moyens antiretour et les bras.

Les surfaces de glissement présentent avantageusement un coefficient de glissement supérieur à 0,05. Elles peuvent être réalisées avec un matériau polymère de type POM ou PTFE.

Dans une troisième forme de réalisation, les moyens antiretour comprennent une pièce crantée et les deux bras comportent des crémaillères respectives.

Les moyens antiretour peuvent être adaptés pour un déplacement horizontal ou pour un déplacement vertical.

Les moyens de déplacement peuvent comprendre un levier mobile en rotation entre une position d'ouverture et une position de fermeture, une came adaptée pour transformer le mouvement de rotation du levier de la position d'ouverture à la position de fermeture en un mouvement de translation provoquant un écartement des bras.

Avantageusement, le levier et l'organe de déblocage comportent deux surfaces d'appui respectives adaptées pour coopérer de manière à
- maintenir l'organe de déblocage dans une position intermédiaire, pendant la rotation du levier de la position d'ouverture à la position de fermeture et
- provoquer le déplacement de l'organe de déblocage de la position intermédiaire à la position de blocage, sous l'action de moyens élastiques, lorsque le levier est en position de fermeture.

Avantageusement encore, en position de blocage, l'organe de déblocage est adapté pour verrouiller le levier en position de fermeture.

L'invention concerne aussi un ensemble comportant un récipient culinaire et au moins un dispositif de préhension tel que précédemment défini.

L'invention sera mieux comprise à l'aide de la description suivante de plusieurs exemples de réalisation du dispositif de préhension amovible d'un récipient culinaire selon l'invention, en référence aux dessins annexés sur lesquels :

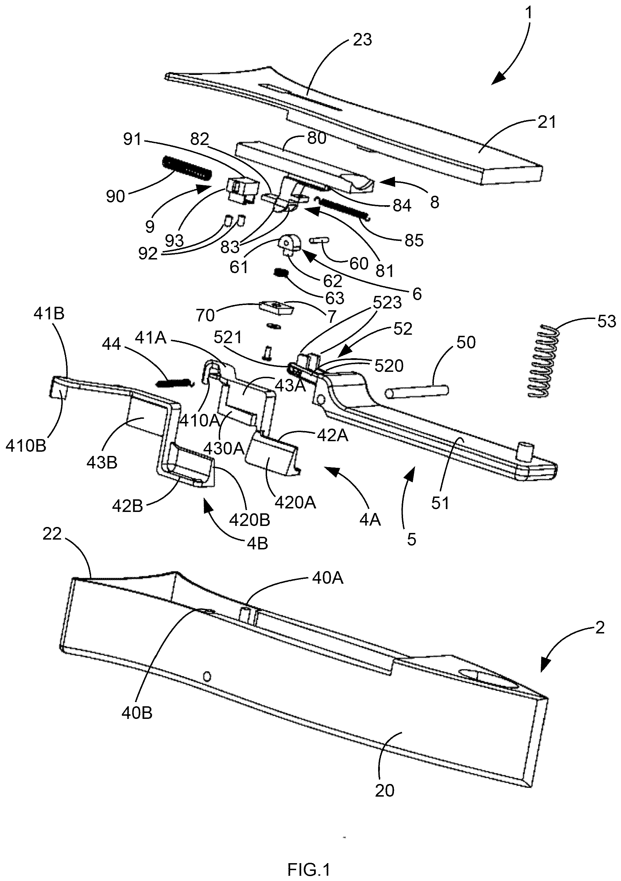

- La figure 1 représente une vue éclatée du dispositif de préhension selon un premier exemple de réalisation ;
- La figure 2 représente une vue de dessous du dispositif de préhension de la figure 1 en position de repos (correspondant à une position d'ouverture du levier);
- La figure 3 représente une vue en coupe A-A du dispositif de préhension de la figure 1 en position de repos ;
- La figure 4 représente une vue en coupe A-A du dispositif de préhension de la figure 1 en position de préhension après verrouillage ;
- La figure 5 représente une vue en coupe A-A du dispositif de préhension de la figure 1 en position de préhension juste après déverrouillage ;

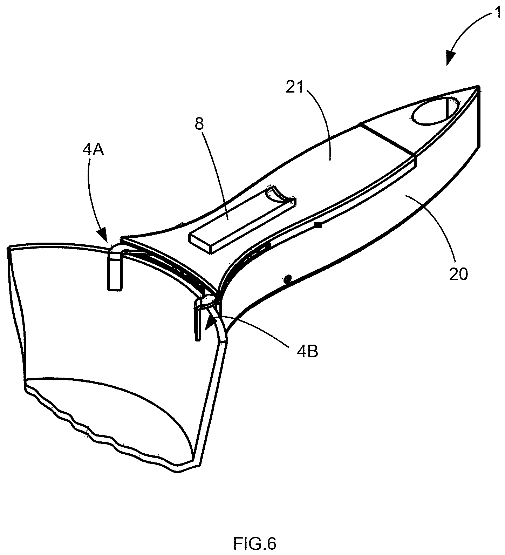

- La figure 6 représente une vue du dispositif de préhension monté sur une paroi (partiellement représentée) d'un récipient culinaire.

D'emblée on notera que, par souci de clarté, les éléments correspondants des différents exemples de réalisation portent les mêmes références, sauf indication contraire.

Les figures illustrent un dispositif de préhension amovible 1, couramment appelé « poignée » ou « poignée amovible », selon un premier exemple de réalisation. Le dispositif 1 est destiné à être monté sur une paroi latérale d'un récipient culinaire puis démonté, par un utilisateur, afin de faciliter le rangement du récipient culinaire. Une fois monté sur le récipient culinaire, le dispositif 1 permet de déplacer celui-ci.

Le récipient culinaire peut être une casserole, une poêle, un faitout, une sauteuse, ou tout autre ustensile culinaire susceptible d'être doté d'une poignée de préhension. Ce récipient comporte une paroi latérale par laquelle il peut être saisi par le dispositif de préhension 1.

D'emblée, on notera que, dans la description qui suit, les termes « horizontal », « vertical », « inférieur », « supérieur », « longitudinal », « transversal », « haut », « bas », « avant », « arrière », employés pour décrire le dispositif de préhension 1, font référence à ce dispositif 1 en situation d'usage, lorsqu'il est monté sur une paroi latérale d'un récipient culinaire, lequel est posé sur un plan horizontal.

Le dispositif de préhension 1 comprend un corps de préhension 2 s'étendant principalement le long d'un axe longitudinal 3. En usage, lorsque le dispositif 1 est monté sur une paroi latérale globalement verticale d'un récipient culinaire, le corps de préhension 2 s'étend à travers un plan horizontal, ou sensiblement horizontal, contenant l'axe longitudinal 3.

Le dispositif 1 comporte une coque inférieure 20 et un capot supérieur 21, assemblés par collage, soudage, brasage, vis/écrou ou tout autre moyen d'assemblage adapté. La coque inférieure 20 comprend une paroi avant 22 adaptée pour être en appui contre une face externe de la paroi latérale du récipient culinaire.

Le dispositif de préhension 1 comporte également deux bras pivotants 4A, 4B, articulés autour de deux axes respectifs verticaux 40A, 40B. Les deux bras 4A, 4B sont symétriques l'un de l'autre par rapport à un plan (non représenté) médian de symétrie, noté PS, vertical contenant l'axe longitudinal 3. Chaque bras 4A (4B) comprend une partie avant 41A (41B), une partie arrière 42A (42B) et une partie intermédiaire 43A (43B).

La partie avant 41A (41B) de chaque bras 4A (4B) comporte une portion d'extrémité libre avant recourbée vers le bas de manière à former, à l'arrière de cette portion avant recourbée, une surface 410A (410B) d'appui interne adaptée pour être en appui contre une face interne de la paroi latérale du récipient culinaire.

Les parties arrières 42A, 42B comportent deux surfaces respectives planes d'écartement 420A, 420B, globalement en regard l'une de l'autre, inclinées par rapport à la verticale d'un angle θ (non représenté) ayant ici une valeur de 15° et s'écartant sensiblement en V l'une de l'autre vers le haut. Ces deux surfaces 420A, 420B sont adaptées pour coopérer avec un coin 7, interposé entre les deux surfaces 420A et 420B, afin de provoquer un écartement des deux bras 4A, 4B lors d'une translation verticale vers le bas du coin 7, comme cela sera décrit plus loin.

Les parties intermédiaires 43A et 43B des bras 4A et 4B comportent également deux surfaces respectives de blocage 430A, 430B. Ces surfaces de blocage 430A, 430B sont adaptées pour coopérer avec une pièce antiretour 9 afin de verrouiller les bras 4A, 4B en position écartée de préhension comme cela sera décrit plus loin.

Les surfaces 430A et 430B, disposées en regard l'une de l'autre, sont planes et verticales. Elles sont inclinées par rapport au plan de symétrie PS et s'écartent en V l'une de l'autre vers l'avant. On note α l'angle d'inclinaison (non représenté) de chaque surface de blocage 430A (430B) par rapport à l'axe longitudinal 3. Cet angle α varie en fonction de l'écartement des bras 4A et 4B.

Lorsque les bras 4A, 4B sont en position de repos, non écartés, l'angle α a une valeur minimale α1. Dans l'exemple particulier décrit ici, α1 vaut 6,25°. Lorsque le dispositif de préhension 1 est monté sur un récipient et que les bras sont écartés en position de préhension, cet angle α a une valeur maximale α2. Dans l'exemple particulier décrit ici, cette valeur d'angle α2 vaut 11°. La valeur d'angle α2 peut être comprise entre 5° et 30°. Plus la valeur d'angle α2 est faible, plus le blocage est efficace, mais plus l'effort nécessaire pour le débloquer doit être important. Inversement, plus la valeur d'angle α2 est élevée et plus le déblocage est facile. En revanche, l'intensité des efforts de blocage reste faible. La valeur d'angle α2 peut être adaptée selon le coefficient de frottement de la pièce antiretour 9 contre les surfaces 430A/B pour obtenir une force de blocage optimale (suffisamment élevée pour être efficace, suffisamment faible pour être déverrouillable). Cette valeur maximale α2 d'angle d'inclinaison dépend du récipient, et plus précisément de la forme, de la courbure et de l'épaisseur de sa paroi latérale.

La plage de valeurs maximales α2 pour l'angle d'inclinaison α des surfaces de blocage 430A, 430B, comprise entre 5° et 30°, représente en pratique des valeurs d'angle pour réaliser un arc-boutement. L'arc-boutement peut toutefois fonctionner pour toute valeur d'angle dont la tangente est inférieure au coefficient de frottement. Il suffit donc d'augmenter le coefficient de frottement entre les surfaces de blocage 430A, 430B et la pièce antiretour 9 pour augmenter l'angle d'inclinaison des surfaces de blocage 430A, 430B tout en préservant leur efficacité.

Un ressort de rappel 44 relie les parties avant de bras 41A et 41B, et est destiné à rappeler les bras 4A, 4B en position rapprochée de repos.

Le dispositif de préhension 1 comprend un élément, ou système, de déplacement adapté pour être déplacé manuellement entre une position d'ouverture et une position de fermeture et pour, lors du passage de la position d'ouverture à la position de fermeture, entraîner un écartement des bras 4A, 4B. Cet élément de déplacement comprend un levier 5 mobile en rotation, ou pivotement, entre une position d'ouverture et une position de fermeture, et une came 6.

Le levier 5 est monté pivotant autour d'un axe 50 transversal (orthogonal au plan médian de symétrie PS) monté fixe sur la coque inférieure 20. Le levier 5 comprend, à l'arrière de l'axe 50, un bras de levier 51 et, à l'avant de l'axe 50, une partie avant 52 d'actionnement.

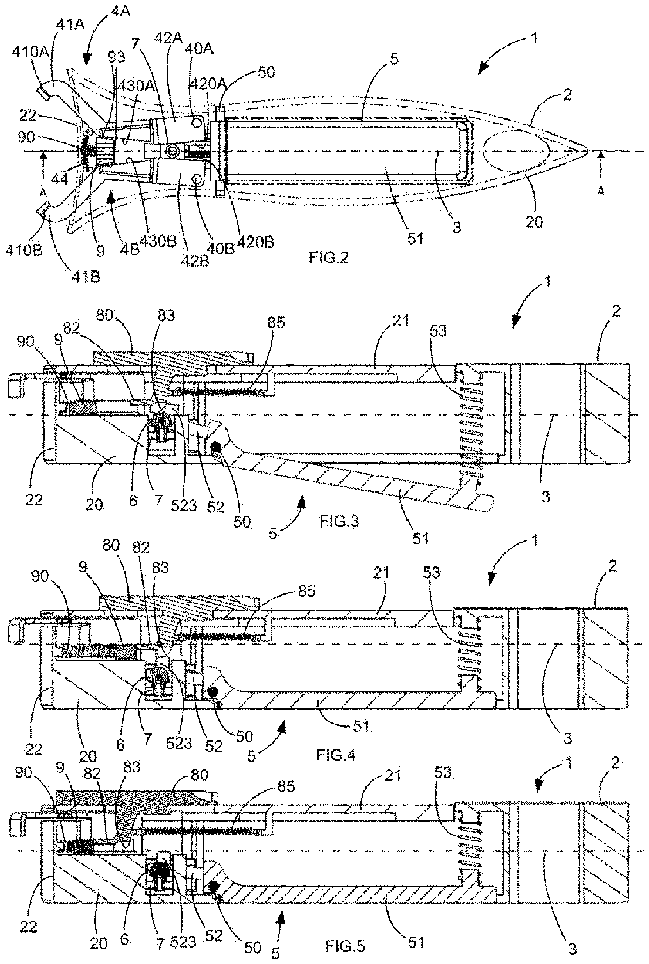

En position d'ouverture, le bras de levier 51 est abaissé vers le bas, incliné par rapport à l'axe longitudinal 3, et s'étend sous la coque inférieure 20, sous l'action de poussée d'un ressort de rappel 53 monté entre le capot supérieur 21 et la partie d'extrémité arrière du bras de levier 51. En position de fermeture, le bras de levier 51 est remonté vers le haut, le ressort 53 étant comprimé, et s'étend parallèlement à l'axe longitudinal 3 dans le prolongement de la paroi inférieure de la coque 20. Le levier 5 est destiné à être pivoté de sa position d'ouverture telle que représentée sur la figure 3 à sa position de fermeture telle que représentée sur la figure 4, sous l'action manuelle d'un utilisateur.

La partie avant 52 comprend deux doigts 520 s'étendant vers l'avant, ménageant entre eux un espace de réception de la came 6 et traversés par deux lumières respectives 521, de forme allongée longitudinalement, de réception d'un axe pivot 60 transversal sur lequel la came 6 est montée. En outre, les doigts 520 portent deux butées supérieures 523.

La came 6 comprend une tête 61 portant une surface supérieure globalement semi-cylindrique ayant pour axe central l'axe pivot 60, prolongée dans le bas par un poussoir inférieur 62. Elle est montée sur la partie avant 52 du levier 5, par une liaison pivot-glissant réalisée par l'axe pivot 60 et les lumières 521, et peut se déplacer verticalement lorsque le levier 5 pivote entre sa position d'ouverture et sa position de fermeture, comme cela sera décrit plus loin. Le poussoir inférieur 62 est solidaire d'une pièce 7 formant coin. Le coin 7 et le poussoir 62 sont assemblés ici par vissage. Un joint ressort 63 est interposé entre le coin 7 et la tête de came 61 et entoure le poussoir 62. En usage, le pivotement du levier 5 de sa position d'ouverture à sa position de fermeture entraîne un déplacement vertical vers le bas de la came 6 et du coin 7. Le coin 7 a ici une forme de parallélépipède plat comportant deux tranches latérales en biais 70 s'étendant dans deux plans inclinés se rapprochant l'un de l'autre vers le bas.

Le dispositif de préhension 1 comprend également un organe de déblocage 8 comportant un bouton supérieur de commande manuelle 80, un doigt inférieur 81, un poussoir avant 82 et deux butées inférieures 83. Le bouton de commande 80 est monté coulissant sur le capot 21, par l'intermédiaire d'un coulisseau 84, interposé entre le bouton supérieur 80 et le doigt inférieur 81, guidé par une fente longitudinale 23, formant coulisse, ménagée à travers le capot 21.

Le poussoir avant 82 s'étend selon la direction longitudinale de l'axe 3 vers l'avant et est destiné à pousser vers l'avant la pièce antiretour 9, lorsque le bouton de commande 80 est déplacé manuellement vers l'avant, comme cela sera décrit plus loin.

Les butées inférieures 83 s'étendent vers le bas et présentent deux tranches inférieures ayant un profil arrondi, ici sensiblement selon un quart de cercle. Les butées 83 et les butées 523 sont adaptées pour coopérer de manière à
- d'une part, pousser vers l'avant l'organe de déblocage 8 lors du passage de la position d'ouverture à la position de fermeture du levier 5 ;
- d'autre part, verrouiller le levier 5 lorsqu'il est en position de fermeture.

Un ressort de rappel 85 est monté entre l'organe de déblocage 8 et le capot 21.

Ce ressort 85 agit de manière à rappeler l'organe de déblocage 8 vers l'arrière jusqu'à une position de repos dans laquelle le coulisseau 84 est en butée contre le capot 21, à l'arrière de la fente 23.

La pièce antiretour 9 précédemment mentionnée est adaptée pour être déplacée d'une position de repos à une position de blocage dans laquelle elle est insérée entre les deux bras 4A, 4B et empêchent un rapprochement de ces derniers. La pièce antiretour 9 comprend un corps 91 formant cage de support de deux rouleaux latéraux 92. Le corps 91 comprend une paroi avant et une paroi arrière, ici verticales et perpendiculaires à l'axe longitudinal 3, reliées par deux parois latérales de blocage 93, verticales et obliques, se rapprochant l'une de l'autre vers l'arrière. On note β l'angle d'inclinaison (non représenté) de chacune des parois latérales de la pièce antiretour par rapport à l'axe longitudinal 3. Cet angle β est ici proche de l'angle α2 d'inclinaison des parois latérales 430A et 430B des bras 4A et 4B. Les rouleaux latéraux 92, montés rotatifs dans des logements ménagés dans le corps 91, sont adaptés pour rouler contre les surfaces obliques de blocage 430A, 430B.Un ressort de rappel 90 est monté entre la pièce antiretour 9 et la paroi avant 22 de la coque 20. La pièce antiretour 9 est mobile en translation longitudinale, le long de l'axe 3, entre une position avant de repos (figure 3), dans laquelle le ressort 90 est comprimé, et une position arrière de blocage (figure 4) dans laquelle, sous l'action de poussée vers l'arrière du ressort 90, la pièce antiretour 9 est insérée entre les deux parties intermédiaires 43A, 43B des deux bras 4A, 4B, écartés l'un de l'autre, et empêche un rapprochement des deux bras 4A, 4B.

Le montage du dispositif de préhension 1 sur la paroi latérale d'un récipient culinaire et son démontage vont maintenant être décrits, en référence aux figures 3 à 5.

Initialement, le levier 5 du dispositif de préhension 1 est en position d'ouverture telle que représentée sur la figure 3. Dans cette position d'ouverture, l'arrière du bras de levier 51 du levier 5 est repoussé vers le bas sous l'action de rappel du ressort 53. Les bras 4A et 4B sont rapprochés l'un de l'autre comme représenté sur la figure 2 sous l'action de rappel du ressort 44. La pièce antiretour 9 est maintenue dans une position avant de repos par les deux bras 4A, 4B rapprochés l'un de l'autre, le ressort 90 étant alors comprimé. Plus précisément, elle est pincée entre les deux surfaces 430A et 430B, à l'avant des parties intermédiaires 43A, 43B des bras 4A, 4B.

En outre, en position d'ouverture du levier 5, les butées avant 523 appuient, à l'avant, contre l'arrière des butées inférieures 83. Cela a pour effet de maintenir l'organe de déblocage 8 dans une position intermédiaire, légèrement décalée vers l'avant par rapport à sa position arrière de repos, contre l'action de rappel du ressort 85.

Afin de monter le dispositif 1 sur le récipient, un utilisateur manipule le dispositif de préhension 1 afin de loger la paroi latérale du récipient entre la paroi avant 22 de la coque inférieure 20 et les bras 4A, 4B.

Le levier 5 est ensuite actionné par l'utilisateur par pivotement du bras de levier 51 vers le haut, autour de l'axe 50, contre l'action de rappel du ressort 53. Le pivotement vers le haut du bras de levier 51 s'accompagne d'un pivotement vers le bas de la partie avant 52 du levier 5, ce qui provoque un déplacement en translation verticale vers le bas du coin 7, par l'intermédiaire de la liaison pivot glissant constituée de l'axe 60 et des lumières 521. Lors de ce déplacement, les parois latérales 70 du coin 7 glissent contre les parois arrières 420A, 420B des bras 4A et 4B et entraînent un écartement latéral des bras 4A et 4B l'un par rapport à l'autre.

Pendant l'écartement des bras 4A, 4B, la pièce antiretour 9 est poussée vers l'arrière par le ressort 90 et s'insère alors entre les bras 4A, 4B. Les rouleaux 92 glissent le long et contre les parois 430A, 430B constituant des surfaces de roulement.

En fin d'écartement des bras 4A, 4B, les parties avant d'extrémité libre des bras 4A, 4B, et plus précisément les surfaces 410A, 410B, viennent en appui et en butée contre la face interne de la paroi du récipient et la paroi avant 22 de la coque inférieure 20 vient en appui contre la face externe de la paroi du récipient. Dans cette position, la pièce antiretour 9 coopère par appui avec les parois obliques 430A et 430B des bras 4A et 4B pour bloquer les bras en position écartée par coincement des rouleaux 92 contre les parois latérales 430A/430B des bras 4A/4B. Les logements des rouleaux font office de rampes de blocage comme dans une roue libre. On notera que la pièce antiretour 9, bloquée entre les bras 4A, 4B, par coincement des rouleaux 92 entre les deux parois de blocage 430A, 430B, rend l'écartement irréversible. L'inclinaison des parois 93 et l'inclinaison correspondante des parois de blocage 430A, 430B contribuent à renforcer l'effet bloquant du serrage. Le blocage des bras 4A/4B en position de préhension s'effectue ainsi par un effet de coincement.

Suite à la mise en butée des extrémités avant des bras 4A, 4B contre la paroi du récipient, le ressort 53 et le joint ressort 63 continuent d'être comprimés sous l'action manuelle de fermeture de l'utilisateur exercée vers le haut sur le bras de levier 51, jusqu'à ce que le levier 5 atteigne la position de fermeture représentée sur la figure 4. Grâce à cela, le dispositif de préhension peut s'adapter à différentes épaisseurs ou formes de parois de récipient. Une fois cette position atteinte, les butées 523 passent sous les butées 83 et libèrent l'organe de déblocage 8 en translation vers l'arrière. L'organe de déblocage 8 effectue alors une translation vers l'arrière, sous l'action de rappel du ressort 85, et passe d'une position intermédiaire, telle que ou proche de celle représentée sur la figure 3, à la position arrière de repos représentée sur la figure 4. Lorsque l'organe de déblocage 8 est en position arrière de repos, les butées 83 sont positionnées au-dessus des butées 523 et en appui contre celles-ci. Cela a pour effet de verrouiller le levier 5 en position de fermeture.

L'utilisateur peut alors cesser l'actionnement du bras de levier 51. Le dispositif de préhension est monté sur le récipient culinaire qui peut être déplacé au moyen du dispositif de préhension. On soulignera que la pièce antiretour 9, coincée entre les deux bras 4A, 4B, permet de réduire de façon significative les jeux entre le dispositif de préhension 1 et le récipient, même en cas de sollicitations dynamiques tant horizontales que verticales.

Pour démonter le dispositif de préhension 1, l'utilisateur doit actionner manuellement l'organe de déblocage 8 en poussant vers l'avant le bouton 80 dans un mouvement de translation guidé par la fente 23. Cela a pour effet, d'une part, de libérer le levier 5 et, d'autre part, de dégager vers l'avant la pièce antiretour 9, comme explicité ci-après.

Lorsque l'organe de déblocage 8 est déplacé vers l'avant comme représenté sur la figure 5, les butées 83 libèrent les butées 523 de sorte que le pivotement dans le sens d'ouverture (inverse au sens de fermeture) du levier 5 n'est plus bloqué. Sous l'action de poussée du ressort 53, le levier 5 ainsi libéré pivote dans le sens d'ouverture, l'arrière du bras de levier 51 pivotant vers le bas. Lors de l'ouverture du levier 5, le coin 7 remonte verticalement.

Par ailleurs, le poussoir 82 de l'organe de déblocage 8 vient en contact avec la paroi arrière de la pièce antiretour 9 et pousse celle-ci en translation vers l'avant contre l'action de rappel du ressort 90. La pièce antiretour 9 est ainsi déplacée de sa position de blocage à sa position de repos telle que représentée sur les figures 2 et 3.

Enfin, sous l'action de rappel du ressort 44, les deux bras 4A, 4B se rapprochent l'un de l'autre et reviennent en position de repos, telle que précédemment décrite.

Au lieu d'être adapté pour un déplacement horizontal de la pièce antiretour 9, le système antiretour pourrait être adapté pour un déplacement vertical de la pièce antiretour 9.

Dans un deuxième exemple de réalisation, les parois latérales 93 de la pièce antiretour 9 et les surfaces de blocage 430A, 430B des bras 4a, 4B comprennent des surfaces de glissement, destinées à glisser l'une contre l'autre lors du déplacement en translation arrière ou avant de la pièce antiretour 9. Le coefficient de glissement des surfaces 93, 430A et 430B peut être supérieur à 0,05. Les surfaces 93, 430A et 430B peuvent être réalisées avec un matériau polymère de type POM ou PTFE. Dans ce cas, le blocage des bras en position de préhension s'effectue par effet de coin entre les surfaces latérales 93 de la pièce antiretour 9 et les surfaces 430A/430B des bras 4A/4B. Les surfaces 93 peuvent être arrondies pour limiter les efforts de frottement lors du serrage.

Dans un troisième exemple de réalisation, la pièce antiretour 9 est crantée. Par exemple, ses parois latérales 93 portent des crans. Dans ce cas, les bras 4A/4B comportent des crémaillères correspondantes, à la place des surfaces de blocage (surfaces de roulement ou de glissement).

Au lieu d'être montés mobiles en rotation, les bras pourraient être mobiles en translation.

L'invention concerne aussi un ensemble comportant le dispositif de préhension 1 et un récipient culinaire.

## Revendications

1. Dispositif de préhension amovible d'un récipient culinaire, ledit récipient comportant une paroi latérale, comprenant
• deux bras de préhension (4A, 4B) mobiles entre une position de repos et une position de préhension dans laquelle ils sont écartés l'un de l'autre et en appui contre une face interne de la paroi latérale du récipient culinaire;
• un organe fixe (2) de préhension adapté pour être en appui contre une face externe de la paroi latérale du récipient culinaire ;
• des moyens de déplacement (5,6,7) adaptés pour être commandés manuellement entre une position d'ouverture et une position de fermeture et pour entraîner un écartement des bras mobiles lors du passage de la position d'ouverture à la position de fermeture,
**caractérisé en ce qu'**il comprend des moyens antiretour (9), distincts des moyens de déplacement (5,6,7), adaptés pour être déplacés d'une position de repos à une position de blocage dans laquelle ils sont insérés entre les deux bras (4A, 4B) et empêchent un rapprochement des deux bras (4A, 4B) et **en ce que** les moyens antiretour (9) comprennent deux parois de blocage (93) et les deux bras (4A, 4B) comportent deux surfaces de blocage (430A, 430B) respectives correspondantes, les parois de blocage (93) et les surfaces de blocage (430A, 430B) étant adaptées pour coopérer par coincement de manière à bloquer les deux bras (4A, 4B) en position écartée.

2. Dispositif selon la revendication 1, **caractérisé en ce qu'**il comprend un organe de déblocage (8) adapté pour être commandé manuellement entre une position de blocage et une position de déblocage et entraîner les moyens antiretour (9) de leur position de blocage à leur position de repos.

3. Dispositif selon la revendication 1 ou 2, **caractérisé en ce qu'**il comprend des moyens élastiques (90) adaptés pour provoquer, lors de l'écartement des bras (4A, 4B), un déplacement des moyens antiretour (9) de leur position de repos à leur position de blocage.

4. Dispositif selon l'une quelconque des revendications 1 à 3, **caractérisé en ce que**, le dispositif s'étendant le long d'un axe longitudinal (3), lorsque les moyens antiretour (9) sont en position de blocage, les surfaces de blocage (430A, 430B) des bras (4A, 4B) sont inclinées par rapport à l'axe longitudinal (3), selon un angle d'inclinaison compris entre 5° et 30°.

5. Dispositif selon l'une quelconque des revendications 1 à 4, **caractérisé en ce que** les deux parois de blocage (93) des moyens antiretour (9) portent des rouleaux (92) et les deux surfaces de blocage (430A, 430B) des bras (4A, 4B) sont des surfaces de roulement des rouleaux (92).

6. Dispositif selon l'une quelconque des revendications 1 à 4, **caractérisé en ce que** les deux parois de blocage des moyens antiretour comprennent des surfaces de glissement destinées à glisser sur les deux surfaces de blocage des bras.

7. Dispositif selon la revendication 6, **caractérisé en ce que** les surfaces de glissement des moyens antiretour présentent un coefficient de glissement supérieur à 0,05.

8. Dispositif selon l'une des revendications 6 et 7, **caractérisé en ce que** les surfaces de glissement des moyens antiretour sont réalisées avec un matériau polymère de type POM ou PTFE.

9. Dispositif selon l'une des revendications 1 à 3, **caractérisé en ce que** les moyens antiretour comprennent une pièce crantée et les deux bras comportent des crémaillères respectives.

10. Dispositif selon l'une des revendications 1 à 9, **caractérisé en ce que** les moyens antiretour sont adaptés pour un déplacement vertical.

11. Dispositif selon l'une des revendications 1 à 9, **caractérisé en ce que** les moyens antiretour (9) sont adaptés pour un déplacement horizontal.

12. Dispositif selon l'une des revendications précédentes, **caractérisé en ce que** les moyens de déplacement comprennent un levier (5) mobile en rotation entre une position d'ouverture et une position de fermeture, une came (6) adaptée pour transformer le mouvement de rotation du levier (5) de la position d'ouverture à la position de fermeture en un mouvement de translation provoquant un écartement des bras (4A, 4B).

13. Dispositif selon la revendication 12, **caractérisé en ce que** le levier (5) et l'organe de déblocage (8) comportent deux surfaces d'appui respectives (523, 83) adaptées pour coopérer de manière à
• maintenir l'organe de déblocage (8) dans une position intermédiaire, pendant la rotation du levier (5) de la position d'ouverture à la position de fermeture et
• provoquer le déplacement de l'organe de déblocage (8) de la position intermédiaire à la position de blocage, sous l'action de moyens élastiques (85), lorsque le levier (5) est en position de fermeture.

14. Dispositif selon la revendication 13, dans lequel, en position de blocage, l'organe de déblocage (8) est adapté pour verrouiller le levier (5) en position de fermeture.

15. Ensemble comportant un récipient culinaire et au moins un dispositif de préhension selon l'une des revendications 1 à 14.

## Patentansprüche

1. Abnehmbare Vorrichtung zum Greifen eines Kochgefäßes, wobei das Gefäß eine Seitenwand aufweist, umfassend
• zwei Greifarme (4A, 4B), die zwischen einer Ruheposition und einer Greifposition beweglich sind, in der sie voneinander abgespreizt sind und an einer inneren Fläche der Seitenwand des Kochgefäßes anliegen;
• eine feststehende Greifeinrichtung (2), die eingerichtet ist, an einer äußeren Fläche der Seitenwand des Kochgefäßes anzuliegen;
• Verschiebungsmittel (5, 6, 7), die eingerichtet sind, manuell zwischen einer Öffnungsposition und einer Schließposition gesteuert zu werden, und die Abspreizung der beweglichen Arme während des Übergangs von der Öffnungsposition zu der Schließposition zu bewirken,
**dadurch gekennzeichnet, dass** sie von den Verschiebungsmitteln (5,6,7) verschiedene Antirücklaufmittel (9) umfasst, die eingerichtet sind, von einer Ruheposition zu einer Verriegelungsposition verschoben zu werden, in der sie zwischen zwei Armen (4A, 4B) eingesetzt sind und eine Annäherung der beiden Arme (4A, 4B) verhindern, und dass die Antirücklaufmittel (9) zwei Verriegelungswände (93) und zwei Arme (4A, 4B) umfassen, die jeweils zwei entsprechende Verriegelungsflächen (430A, 430B) aufweisen, wobei die Verriegelungswände (93) und die Verriegelungsflächen (430A, 430B) eingerichtet sind, durch Verkeilen zusammenzuwirken, um die zwei Arme (4A, 4B) in der abgespreizten Position zu verriegeln.

2. Vorrichtung nach Anspruch 1, **dadurch gekennzeichnet, dass** sie eine Entriegelungseinrichtung (8) umfasst, die eingerichtet ist, manuell zwischen einer Verriegelungsposition und einer Entriegelungsposition gesteuert zu werden und die Antirücklaufmittel (9) aus ihrer Verriegelungsposition zu ihrer Ruheposition anzutreiben.

3. Vorrichtung nach Anspruch 1 oder 2, **dadurch gekennzeichnet, dass** sie elastische Mittel (90) umfasst, die eingerichtet sind, um während des Abspreizens der Arme (4A, 4B) eine Verschiebung der Antirücklaufmittel (9) von ihrer Ruheposition zu ihrer Verriegelungsposition zu bewirken.

4. Vorrichtung nach einem der Ansprüche 1 bis 3, **dadurch gekennzeichnet, dass** sich die Vorrichtung entlang einer Längsachse (3) erstreckt, wenn die Antirücklaufmittel (9) in der Verriegelungsposition sind, wobei die Verriegelungsflächen (430A, 430B) der Arme (4A, 4B) mit Bezug auf die Längsachse (3) in einem Neigungswinkel geneigt sind, der zwischen 5° und 30° liegt.

5. Vorrichtung nach einem der Ansprüche 1 bis 4, **dadurch gekennzeichnet, dass** die beiden Verriegelungswände (93) der Antirücklaufmittel (9) Rollen (92) tragen, und dass die beiden Verriegelungsflächen (430A, 430B) der Arme (4A, 4B) Rollflächen der Rollen (92) sind.

6. Vorrichtung nach einem der Ansprüche 1 bis 4, **dadurch gekennzeichnet, dass** die beiden Verriegelungswände der Antirücklaufmittel Gleitflächen aufweisen, die dazu bestimmt sind, auf den beiden Verriegelungsflächen der Arme zu gleiten.

7. Vorrichtung nach Anspruch 6, **dadurch gekennzeichnet, dass** die Gleitflächen der Antirücklaufmittel einen Reibungskoeffizienten größer als 0,05 aufweisen.

8. Vorrichtung nach einem der Ansprüche 6 und 7, **dadurch gekennzeichnet, dass** die Gleitflächen der Antirücklaufmittel aus einem Polymermaterial vom Typ POM oder PTFE realisiert sind.

9. Vorrichtung nach einem der Ansprüche 1 bis 3, **dadurch gekennzeichnet, dass** die Antirücklaufmittel ein eingekerbtes Teil umfassen und dass die beiden Arme jeweils Zahnstangen aufweisen.

10. Vorrichtung nach einem der Ansprüche 1 bis 9, **dadurch gekennzeichnet, dass** die Antirücklaufmittel für eine vertikale Bewegung eingerichtet sind.

11. Vorrichtung nach einem der Ansprüche 1 bis 9, **dadurch gekennzeichnet, dass** die Antirücklaufmittel (9) für eine horizontale Verschiebung eingerichtet sind.

12. Vorrichtung nach einem der vorhergehenden Ansprüche, **dadurch gekennzeichnet, dass** die Verschiebungsmittel einen Hebel (5) umfassen, der drehbeweglich zwischen einer Öffnungsposition und einer Schließposition ist, wobei ein Nocken (6) eingerichtet ist, die Rotationsbewegung des Hebels (5) von der Öffnungsposition zu der Schließposition in eine translatorische Bewegung umzuwandeln, die ein Abspreizen der Arme (4A, 4B) hervorruft.

13. Vorrichtung nach Anspruch 12, **dadurch gekennzeichnet, dass** der Hebel (5) und die Entriegelungseinrichtung (8) jeweils zwei Auflageflächen (523, 83) umfassen, die eingerichtet sind zusammenzuwirken, um
• die Entriegelungseinrichtung (8) in einer Zwischenposition während der Drehung des Hebels (5) aus der Öffnungsposition zu der Schließposition zu halten, und
• die Verschiebung von der Entriegelungseinrichtung (8) von der Zwischenposition zu der Verriegelungsposition unter der Wirkung der elastischen Mittel (85) zu verursachen, wenn sich der Hebel (5) in der Schließposition befindet.

14. Vorrichtung nach Anspruch 13, wobei in der Verriegelungsposition die Entriegelungseinrichtung (8) eingerichtet ist, den Hebel (5) in der Schließposition zu arretieren.

15. Anordnung, die ein Kochgefäß und mindestens eine Vorrichtung zum Greifen nach einem der Ansprüche 1 bis 14 aufweist.

## Claims

1. Removable gripping device for a food container, said container comprising a lateral wall, comprising
- two gripping arms (4A, 4B) mobile between an idle position and a gripping position wherein they are separated from one another and bearing against an internal face of the lateral wall of the food container;
- a fixed gripping member (2) suitable for bearing against an external face of the lateral wall of the food container;
- means of displacement (5, 6, 7) suitable for being controlled manually between an open position and a closed position and for driving a separation of the mobile during the passing from the open position to the closed position,
**characterised in that** it comprises non-return means (9), separate from the means of displacement (5, 6, 7), suitable for being displaced from an idle position to a locked position wherein they are inserted between the two arms (4A, 4B) and preventing a coming together of the two arms (4A, 4B) and **in that** the non-return means (9) include two blocking walls (93) and the two arms (4A, 4B) comprise two respectively corresponding blocking surfaces (430A, 430B), with the blocking walls (93) and the blocking surfaces (430A, 430B) being adapted to cooperate by pinching in such a way as to block the two arms (4A, 4B) in separated position.

2. Device according to claim 1, **characterised in that** it comprises an unblocking member (8) suitable for being controlled manually between a locked position and an unlocked position and drive the non-return means (9) from their blocked position to their idle position.

3. Device according to claim 1 or 2, **characterised in that** it comprises elastic means (90) suitable for provoking, during the separation of the arms (4A, 4B), a displacement of the non-return means (9) from their idle position to the blocked position.

4. Device according to any of claims 1 to 3, **characterised in that**, the device extending along a longitudinal axis (3), when the non-return means (9) are in blocked position, the blocking surfaces (430A, 430B) of the arms (4A, 4B) are inclined in relation to the longitudinal axis (3), according to an angle of inclination between 5° and 30°.

5. Device according to any of claims 1 to 4, **characterised in that** the two blocking walls (93) of the non-return means (9) bear rollers (92) and the two blocking surfaces (430A, 430B) of the arms (4A, 4B) are bearing surfaces of the rollers (92).

6. Device according to any of claims 1 to 4, **characterised in that** the two blocking walls of the non-return means comprise sliding surfaces intended to slide on the two blocking surfaces of the arms.

7. Device according to claim 6, **characterised in that** the sliding surfaces of the non-return means have a coefficient of sliding friction greater than 0.05.

8. Device according to one of claims 6 and 7, **characterised in that** the sliding surfaces of the non-return means are made with a polymer material of the POM or PTFE type.

9. Device according to one of claims 1 to 3, **characterised in that** the non-return means comprise a notched part and the two arms comprise respective racks.

10. Device according to one of claims 1 to 9, **characterised in that** the non-return means are suitable for a vertical displacement.

11. Device according to one of claims 1 to 9, **characterised in that** the non-return means (9) are suitable for a horizontal displacement.

12. Device according to one of the preceding claims, **characterised in that** the means of displacement comprise a lever (5) mobile in rotation between an open position and a closed position, a cam (6) suitable for transforming the rotation movement of the lever (5) from the open position to the closed position into a translation movement provoking a separation of the arms (4A, 48).

13. Device according to claim 12, **characterised in that** the lever (5) and the unblocking member (8) comprise two respective support surfaces (523, 83) suitable for cooperating in such a way as to
- maintain the unblocking member (8) in an intermediate position, during the rotation of the lever (5) from the open position to the closed position and
- provoke the displacement of the unblocking member (8) from the intermediate position to the blocking position, under the action of elastic means (85), when the lever (5) is in closed position.

14. Device according to claim 13, wherein, in blocking position, the unblocking member (8) is suitable for locking the lever (5) in closed position.

15. Unit comprising a food container and at least one gripping device according to one of claims 1 to 14.
